# FASCICULE DE BREVET EUROPEEN

(11) **EP 1 867 096 B1**
(45) Date de publication et mention de la délivrance du brevet: **10.06.2009**
(21) Numéro de dépôt: 06709315.3
(22) Date de dépôt: 14.02.2006
(51) Int. Cl.: H04L 9/08, H04N 7/167

(54) **PROCEDE ET SYSTEME DE RECEPTION D'UN SIGNAL MULTIMEDIA, ENTITE CRYPTOGRAPHIQUE POUR CE PROCEDE DE RECEPTION ET SYSTEME, PROCEDE ET BOITE NOIRE POUR LA FABRICATION DE L'ENTITE CRYPTOGRAPHIQUE**
VERFAHREN UND SYSTEM ZUM EMPFANGEN EINES MULTIMEDIASIGNALS, KRYPTOGRAPHISCHE ENTITÄT FÜR DAS EMPFANGSVERFAHREN UND -SYSTEM UND VERFAHREN UND SCHWARZER KASTEN ZUM PRODUZIEREN DER KRYPTOGRAPHISCHEN ENTITÄT
METHOD AND SYSTEM FOR RECEIVING A MULTIMEDIA SIGNAL, CRYPTOGRAPHIC ENTITY FOR SAID RECEPTION METHOD AND SYSTEM, AND METHOD AND BLACK BOX FOR PRODUCING SAID CRYPTOGRAPHIC ENTITY

(30) Priorité: 14.02.2005 FR 0501466
(43) Date de publication de la demande: 19.12.2007
(73) Titulaire: Viaccess, 92057 Paris La Défense Cedex (FR)
(72) Inventeur: TRONEL, Bruno, F-92400 Courbevoie (FR); BAUDOT, Franck, F-78140 Velizy (FR)
(74) Mandataire: Myon, Gérard Jean-Pierre
(86) Numéro de dépôt international: PCT/FR2006/000335
(87) Numéro de publication internationale: WO 2006/085017

(56) Documents cités:
- EP-A- 1 026 898
- WO-A-00/04718
- WO-A-03/036975
- FR-A- 2 755 809
- FR-A- 2 818 062
- US-B1- 6 402 028

## Description

La présente invention concerne un procédé et un système de réception d'un signal multimédia, une entité cryptographique pour ce procédé de réception et un système et un procédé de fabrication de l'entité cryptographique, et une boîte noire pour le système de fabrication.

Dans cette description, la terminologie utilisée est celle couramment utilisée dans le domaine des systèmes de transmission de signaux multimédias embrouillés. Pour une introduction à cette terminologie et aux systèmes de transmission de signaux multimédias embrouillés, le lecteur peut consulter l'article suivant :
- « A single conditional access system for satellite-cable and terrestrial TV », Françoise Coutrot, Vincent Michon, Centre Commun d'Etudes de Télédiffusion et Télécommunication, Cesson-Sévigné, France, IEEE Transactions on Consumer Electronics, Vol. 35, No. 3, AUGUST 1989.

Le document D1: W00004718 concerne un procédé permettant de réaliser des échanges sécurisés d'informations au moins entre un premier et un deuxième appareil audiovisuel. En l'occurrence, le premier appareil échange avec le second appareil un certificat comprenant une clé publique de transport cryptée par une clé privée de gestion. Le deuxième appareil se sert d'une clé publique de gestion équivalente pour décrypter le certificat, puis de la clé publique de transport pour crypter l'information envoyée au premier appareil, le premier appareil utilisant une clé privée équivalente pour décrypter l'information. L'invention convient particulièrement aux cas où l'on cherche à assurer des communications sécurisées entre un premier décodeur et un second décodeur.

Le document D2 : FR2755809 concerne un procédé de protection d'information transmise d'un élément de sécurité vers un décodeur ainsi qu'un système de protection utilisant un tel procédé. La protection de l'information est réalisée par le chiffrement au sein de l'élément de sécurité de l'information à transmettre vers le décodeur et par le déchiffrement de cette information au sein du décodeur. Le procédé s'applique aux systèmes à accès conditionnels.

Des procédés connus de réception de signaux multimédias embrouillés à l'aide d'un mot de contrôle utilisent une première entité cryptographique apte à être raccordée à l'une quelconque de P secondes entités cryptographiques pour former une partie d'un dispositif de réception du signal multimédia embrouillé.

Par exemple, la première entité cryptographique est un processeur de sécurité tel qu'une carte à puce et la seconde entité est une unité de désembrouillage de signaux multimédias.

Dans ces procédés connus, lorsque la première entité est raccordée à l'une quelconque de P secondes entités cryptographiques pour former une partie d'un dispositif de réception du signal multimédia embrouillé, alors la première entité chiffre le mot de contrôle ou le signal multimédia désembrouillé à l'aide d'une clé de session puis transmet le mot de contrôle chiffré ou le signal multimédia chiffré à la seconde entité, et cette seconde entité déchiffre le mot de contrôle chiffré ou le signal multimédia chiffré transmis par la première entité à l'aide d'une clé de session. Les clés de session de la première et de la seconde entités sont obtenues par diversification de clés racines à l'aide d'un même identifiant connu à la fois de la première et de la seconde entités.

Dans les procédés connus, pour obtenir une clé de session identique dans une première et une seconde entités raccordées l'une à l'autre, il est prévu une phase d'initialisation de la clé de session, par exemple, lors de la première utilisation de la première entité avec la seconde entité. Lors de cette phase d'initialisation, un identifiant de la seconde entité est transmis à la première entité. La première entité diversifie une clé racine à l'aide de l'identifiant de la seconde entité pour obtenir la clé de session. De façon similaire, la seconde entité diversifie la même clé racine à l'aide de son propre identifiant pour obtenir une clé de session identique. Ainsi, dans les procédés connus, la première entité est utilisable dans n'importe laquelle des secondes entités.

Toutefois, il est souhaitable dans certains cas de rendre la première entité uniquement utilisable avec un groupe particulier de N secondes entités choisies parmi l'ensemble plus vaste des P secondes entités. On dit alors que cette première entité est appariée à ce groupe particulier de secondes entités.

L'invention vise, par conséquent, à proposer un procédé de réception d'un signal multimédia embrouillé à l'aide d'un mot de contrôle dans lequel au moins une première entité cryptographique est appariée avec un groupe de N secondes entités cryptographiques.

L'invention a donc pour objet un tel procédé de réception dans lequel seules les secondes entités d'un groupe de N secondes entités choisies dans l'ensemble plus vaste des P secondes entités utilisent une clé de session obtenue par diversification d'une clé racine commune et identique à la clé racine utilisée pour obtenir la clé de session de la première entité, N étant un nombre de secondes entités strictement inférieur à P et strictement supérieur à 1.

Par conséquent, dans le procédé ci-dessus, seuls les secondes entités du groupe de N secondes entités obtiennent une clé de session identique à celle utilisée par la première entité. Ainsi, cette première entité peut être utilisée dans l'une quelconque des secondes entités du groupe. Par contre, si cette première entité est utilisée dans une seconde entité qui n'appartient pas à ce groupe, la clé de session qu'obtient la première entité est différente de celle qu'obtient la seconde entité, ce qui rend cette première entité inutilisable dans cette seconde entité.

Les modes de réalisation de ce procédé de réception peuvent comporter une ou plusieurs des caractéristiques suivantes :
- après le raccordement de la première entité à l'une des secondes entités dudit groupe, au moins l'une de la première ou de la seconde entité diversifie la clé racine mémorisée par ledit identifiant pour obtenir la clé de session en utilisant un module de diversification puis rend ensuite ce module de diversification inutilisable pour la création d'une nouvelle clé de session de manière à apparier cette entité uniquement à l'autre entité à laquelle elle est raccordée ;
- le module de diversification est rendu inutilisable en rendant inutilisable la clé racine à diversifier ;
- après le raccordement de la première entité à l'une des secondes entités, l'une de la première ou de la seconde entité transmet l'identifiant vers l'autre entité sous forme non chiffré ;
- après le raccordement de la première entité à l'une de ces secondes entités, la première entité sélectionne la clé de session ou la clé racine permettant d'obtenir la clé de session à utiliser en fonction d'un mode de protection que la première entité impose à la seconde entité ou mis en oeuvre par la seconde entité ;
- la première entité est un processeur de sécurité et la seconde entité une unité de désembrouillage ou la première entité est une unité de désembrouillage et la seconde entité un récepteur de signaux multimédias embrouillés.

Les modes de réalisation du procédé de réception présentent en outre les avantages suivants :
- rendre inutilisable le module de diversification pour la création de la clé de session après le raccordement et l'initialisation de la clé de session entre une première et une seconde entités permet de créer un appariement fort entre ces deux entités puisque l'entité qui a diversifié la clé racine pour obtenir la clé de session devient uniquement utilisable avec l'autre entité à laquelle elle est raccordée ;
- rendre inutilisable le module de diversification en rendant la clé racine inutilisable pour la création d'une nouvelle clé de session permet d'obtenir un appariement fort réversible et qui peut être supprimé ;
- le fait de transmettre en clair l'identifiant évite de mettre en oeuvre un mécanisme de chiffrement de cet identifiant et la gestion des secrets associés et permet de plus de ne donner aucune information sur les procédés de chiffrement mis en oeuvre dans les première et seconde entités ;
- la possibilité de sélectionner la clé de session en fonction du mode de protection employé par la seconde entité permet à la première entité d'adapter ou de bloquer son fonctionnement quand elle est utilisée avec des secondes entités mettant en oeuvre des modes de protection différents, par exemple, avec des secondes entités de générations différentes. De plus, si les secrets relatifs à l'obtention d'une des clés de session dans un des modes de protection deviennent connus, il est possible de continuer à utiliser les deux entités en toute sécurité en utilisant l'autre mode de protection, sous réserve que la seconde entité supporte cet autre mode.

L'invention a également pour objet une seconde entité d'un dispositif de réception d'un signal multimédia embrouillé avec un mot de contrôle, adaptée pour mettre en oeuvre le procédé de réception ci-dessus. Cette seconde entité est apte à déchiffrer le mot de contrôle chiffré ou le signal multimédia chiffré transmis par la première entité à l'aide de la clé de session. La clé de session utilisée par la seconde entité est obtenue par diversification d'une clé racine identique à la clé racine utilisée pour obtenir les clés de session du groupe de N secondes entités.

Les modes de réalisation de cette seconde entité peuvent comporter une ou plusieurs des caractéristiques suivantes :
- une mémoire contenant au moins un cryptogramme préenregistré de la clé de session ;
- un module de transmission apte à transmettre l'identifiant sous forme non chiffrée vers la première entité après le raccordement de la première entité à cette seconde entité ;
- un circuit intégré de sécurité à l'intérieur duquel se trouve une mémoire sécurisée contenant au moins une clé de déchiffrement et un premier algorithme de déchiffrement du cryptogramme préenregistré pour obtenir la clé de session, et un second algorithme de déchiffrement du mot de contrôle chiffré ou du signal multimédia chiffré transmis par la première entité à l'aide de la clé de session déchiffrée par le premier algorithme ;
- une mémoire non sécurisée dans laquelle est enregistré un cryptogramme de la clé de session, ce cryptogramme ayant été obtenu en chiffrant la clé de session avec une clé secrète, et un circuit intégré de sécurité contenant :
   a) une mémoire sécurisée dans laquelle est enregistrée la clé secrète, et
   b) un algorithme de déchiffrement du cryptogramme à l'aide de la clé secrète.

Ces modes de réalisation de la seconde entité présentent en outre les avantages suivants :
- l'utilisation d'une clé de session préenregistrée dans la seconde entité évite d'implémenter dans cette seconde entité un module de diversification identique à celui utilisé pour obtenir la clé de session de la première entité. Ceci augmente la sécurité du dispositif de réception puisqu'un tel module de diversification serait exposé aux tentatives de cryptanalyses ;
- l'utilisation de circuits intégrés de sécurité accroît également la sécurité du dispositif de réception puisque la clé de session est uniquement déchiffrée à l'intérieur du circuit intégré et que ces circuits intégrés sont plus difficiles à cryptanalyser ; et
- l'enregistrement d'un cryptogramme de la clé de session dans une mémoire non sécurisée rend la modification de la clé de session plus facile sans pour autant compromettre le niveau de sécurité du dispositif de réception puisque la clé secrète est enregistrée dans une mémoire sécurisée.

L'invention a également pour objet un système de réception d'un signal multimédia embrouillé à l'aide d'un mot de contrôle, ce système comportant au moins une première entité cryptographique et P secondes entités cryptographiques, la première entité cryptographique étant apte à être raccordée à l'une quelconque des P secondes entités cryptographiques pour former une partie d'un dispositif de réception du signal multimédia embrouillé, la première entité étant apte à chiffrer le mot de contrôle ou le signal multimédia désembrouillé à l'aide d'une clé de session et à transmettre le mot de contrôle ou le signal multimédia ainsi chiffré à la seconde entité à laquelle il est raccordé, chaque seconde entité étant apte à déchiffrer le mot de contrôle chiffré ou le signal multimédia chiffré transmis par la première entité à l'aide d'une clé de session, les clés de session de la première et de la seconde entités étant obtenues par diversification d'une clé racine à l'aide d'un même identifiant. Dans ce système de réception, seules les secondes entités d'un groupe de N secondes entités choisies dans l'ensemble plus vaste des P secondes entités sont aptes à utiliser une clé de session obtenue par diversification d'une clé racine commune et identique à la clé racine utilisée pour obtenir la clé de session de la première entité, N étant un nombre de secondes entités strictement inférieur à P et strictement supérieur à 1.

L'invention a également pour objet un système de fabrication d'une seconde entité comportant un circuit intégré de sécurité telle que décrite ci-dessus, ce système comportant :
- une base de données centrale dans laquelle est enregistré, pour chaque circuit intégré de sécurité utilisable pour la fabrication de la seconde entité, un identifiant unique de ce circuit intégré associé au cryptogramme obtenu en chiffrant la clé de session avec la clé secrète déjà préenregistrée dans la mémoire sécurisée de ce circuit intégré,
- une première unité de fabrication de la seconde entité à l'aide d'un circuit intégré de sécurité comportant l'identifiant unique de ce circuit intégré et la mémoire sécurisée dans laquelle est déjà préenregistrée la clé secrète, cette première unité de fabrication étant apte à enregistrer dans la mémoire non sécurisée de la seconde entité le cryptogramme de la clé de session,
- une première boîte noire apte :
   1) à relever l'identifiant unique du circuit intégré utilisé pour la fabrication de la seconde entité, et
   2) à transmettre à la première unité de fabrication, en réponse, le cryptogramme associé à l'identifiant relevé dans la base de données centrale pour que la première unité de fabrication puisse enregistrer ce cryptogramme dans la mémoire non sécurisée de cette seconde entité.

Un tel système de fabrication permet d'enregistrer le cryptogramme approprié de la clé de session dans la mémoire non sécurisée sans que la clé secrète permettant de déchiffrer ce cryptogramme soit connue de la première unité de fabrication.

Les modes de réalisation de ce système de fabrication peuvent comporter une ou plusieurs des caractéristiques suivantes :
- une seconde unité de fabrication de circuits intégrés de sécurité, cette seconde unité de fabrication étant apte à enregistrer dans la mémoire sécurisée de chaque circuit intégré fabriqué, la clé secrète et l'identifiant unique du circuit intégré, et
- une seconde boîte noire apte à transmettre à la seconde unité de fabrication l'identifiant du circuit intégré et la clé secrète à enregistrer dans la mémoire sécurisée du circuit intégré fabriqué.

Les modes de réalisation du système de fabrication ci-dessus présente en outre les avantages suivants :
- lorsque la seconde boîte noire est apte à transmettre l'identifiant du circuit intégré de sécurité cela évite d'avoir à compléter la base de données centrale avec un identifiant généré par la seconde unité de fabrication.

L'invention a également pour objet les boîtes noires spécialement adaptées pour être mises en oeuvre dans le système de fabrication décrit ci-dessus et un procédé de fabrication d'une seconde entité.

L'invention a également pour objet un procédé de fabrication d'une seconde entité apte à être mis en oeuvre dans le système de fabrication ci-dessus.

L'invention sera mieux comprise à la lecture de la description qui va suivre, donnée uniquement à titre d'exemple et faite en se référant aux dessins sur lesquels :
- la figure 1 est une illustration schématique de l'architecture d'un système de transmission et de réception d'un signal multimédia embrouillé ;
- la figure 2 est une illustration schématique d'un système de fabrication de processeurs de sécurité et d'unités de désembrouillage utilisés dans le système de la figure 1 ;
- la figure 3 est un organigramme d'un procédé de fabrication de processeurs de sécurité et d'unités de désembrouillage mis en oeuvre dans le système de la figure 1 ;
- la figure 4 est un organigramme d'un procédé de réception d'un signal multimédia embrouillé mis en oeuvre dans le système de la figure 1 ; et
- la figure 5 est une illustration schématique d'un autre mode de réalisation du système de la figure 1.

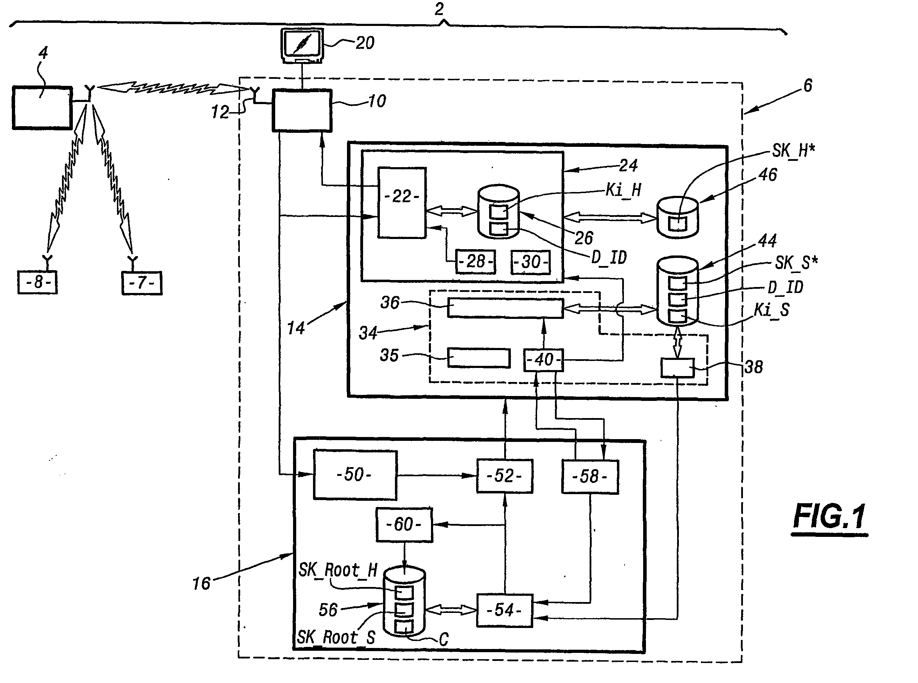

La figure 1 représente un système, désigné par la référence générale 2, de transmission et de réception d'un signal multimédia ou audiovisuel embrouillé tel que, par exemple, des émissions de télévision ou des programmes multimédias. Le système 2 comporte un émetteur 4 apte à diffuser simultanément vers plusieurs dispositifs de réception le signal multimédia embrouillé à l'aide d'un mot de contrôle. Cet émetteur 4 est également apte à transmettre vers chacun des dispositifs de réception des messages ECM (Entitlement Control Message) contenant le mot de contrôle utilisable pour désembrouiller le signal multimédia ainsi que des messages EMM (Entitlement Management Message) contenant des informations de gestion des droits d'accès des abonnés.

Pour simplifier la figure 1, seuls trois dispositifs de réception 6 à 8 sont représentés. Seuls les détails du dispositif 6 nécessaires à la compréhension de l'invention sont décrits ici. Les dispositifs 7 et 8 diffèrent du dispositif 6 uniquement par la nature des informations enregistrées dans ces dispositifs.

Le dispositif 6 est, par exemple, formé de trois entités c'est-à-dire :
- un récepteur ou un décodeur 10 raccordé à un réseau de distribution, par un moyen tel que représenté ici par une antenne 12 pour recevoir les signaux multimédias embrouillés diffusés par l'émetteur 4 et pour les décoder après leur désembrouillage,
- une unité 14 de désembrouillage des signaux multimédias reçus ; et
- un processeur de sécurité amovible 16 apte à déchiffrer le mot de contrôle contenu dans un message ECM.

Dans la suite, la référence à un mot de contrôle s'applique à un ou plusieurs des mots de contrôle d'un ECM.

Le récepteur 10 est également raccordé à une unité d'affichage 20 tel qu'un poste de télévision, sur lequel est affiché le signal multimédia désembrouillé par l'unité 14.

L'unité 14 se présente, par exemple, sous la forme d'une carte PCMCIA (Personal Computer Memory Card International Association) amovible, destinée à être insérée dans le récepteur 10 et l'unité 14 est conforme à la norme EN 50221 « Common Interface Specification for Conditional Access and other Digital Video Broadcasting Decoder Applications ». A cet effet, le récepteur 10 et l'unité 14 sont chacun équipés de connecteurs d'accouplage et de désaccouplage mécanique de l'unité 14 et du récepteur 10.

Cette unité 14 comporte un désembrouilleur 22 apte à désembrouiller le signal multimédia embrouillé à l'aide du mot de contrôle.

Ici, le désembrouilleur 22 fait partie d'un circuit intégré 24 de sécurité.

A titre d'illustration, l'unité 14 est apte à mettre en oeuvre un mode de protection matérielle et un mode de protection logicielle de son interface avec le processeur 16 :
- dans le mode de protection matérielle, les fonctions cryptographiques, et les mémoires contenant les clés associées, utilisées dans la protection de cette interface sont mises en oeuvre par du matériel, tel qu'un circuit intégré de sécurité ;
- dans le mode de protection logicielle, ces fonctions et mémoires sont mises en oeuvre par le logiciel ; ce mode est utilisé notamment dans une unité 14 ne disposant pas de circuit intégré de sécurité tel que le circuit 24.

Pour mettre en oeuvre le mode de protection matérielle, le circuit intégré 24 comporte une mémoire sécurisée 26 ainsi que deux modules de déchiffrement 28 et 30.

La mémoire 26 est dotée de mécanismes pour rendre difficile toute tentative de lecture de son contenu par des personnes non autorisées. A cause de ces mécanismes, il est possible d'enregistrer des informations dans cette mémoire 26 uniquement lors de la fabrication ou de la personnalisation du circuit intégré et en tout état de cause avant son intégration dans une unité de désembrouillage.

Cette mémoire 26 contient un identifiant D_ID de l'unité 14 et une clé secrète Ki_H.

Le module de déchiffrement 28 est apte à déchiffrer un cryptogramme CW* d'un mot de contrôle et le module de déchiffrement 30 est apte à déchiffrer un cryptogramme SK_H* d'une clé de session à l'aide de la clé Ki_H.

L'unité 14 comporte également un module logiciel 34 d'accès conditionnel apte en outre à gérer l'interface entre l'unité 14 et le processeur de sécurité 16.

Pour mettre en oeuvre le mode de protection logicielle, ce module logiciel 34 comporte ici notamment :
- un module logiciel 35 de déchiffrement du cryptogramme CW*, et
- un module logiciel 36 de déchiffrement d'un cryptogramme SK_S* d'une clé de session à l'aide d'une clé secrète Ki_S.

Le module logiciel 34 comporte aussi un module 38 de transmission vers le processeur 16 de l'identifiant D_ID et un module 40 d'activation de l'un des modes de protection de l'interface sous le contrôle du processeur de sécurité 16.

Enfin, l'unité 14 comporte une mémoire 44 non sécurisée contenant l'identifiant D_ID, le second cryptogramme SK_S* et la clé secrète Ki_S. Cette mémoire 44 est raccordée au module logiciel 34. L'unité 14 comporte également une mémoire 46 non sécurisée contenant le premier cryptogramme SK_H*. La mémoire 46 est raccordée au circuit intégré 24. Les informations contenues dans ces mémoires 44 et 46 sont facilement modifiables, par exemple, sous la commande d'un message EMM.

Le processeur de sécurité 16 se présente, par exemple, sous la forme d'une carte à puce apte à être insérée dans l'unité de désembrouillage 14. A cet effet, l'unité 14 et le processeur 16 comportent chacun des interfaces de connexion, telles que des connecteurs mécaniques d'accouplage et désaccouplage de l'unité 14 et du processeur 16.

Ce processeur de sécurité comporte un module 50 d'extraction et de déchiffrement d'un mot de contrôle contenu dans un message ECM. Ce module 50 est raccordé à l'entrée d'un module 52 de chiffrement du mot de contrôle extrait à l'aide d'une clé de session SK_H ou SK_S, avant sa transmission à l'unité 14. Pour cela, le processeur 16 comporte également un module 54 de diversification d'une clé racine SK_Root_H ou SK_Root_S par l'identifiant D_ID pour obtenir la clé de session SK_H ou SK_S. Le module de diversification 54 est raccordé à une mémoire 56 comportant les clés racines SK_Root_S et SK_Root_H ainsi qu'une constante secrète C. Les clés racines SK_Root_S et SK_Root_H sont communes à un groupe de X processeurs de sécurité du système 2. X étant un nombre entier supérieur ou égal à 1 et strictement inférieur au nombre total de processeurs de sécurité utilisés dans le système 2. Le module 54 diversifie la clé racine à l'aide d'un algorithme de diversification connu, tel que l'un de ceux décrits dans le livre « Cryptographie appliquée », Bruce Schneier, 1997, éditeur John Wiley and Sons, inc pour l'application ANSI X 9.17 aux DES (Data Encryption Standard).

Le processeur 16 est également équipé d'un module 58 de sélection du mode de protection à activer dans l'unité 14 et donc de la clé de session à utiliser. Le module 58 est en particulier apte à commander le module 40 d'activation du mode de protection matérielle ou logicielle dans l'unité 14.

Le processeur 16 a également un module 60 propre à créer un appariement fort entre l'unité 14 et le processeur 16, de sorte que ce processeur de sécurité devient uniquement utilisable en combinaison avec l'unité 14.

La structure des dispositifs 7 et 8 est identique à celle du dispositif 6. Par contre, l'identifiant D_ID, les clés secrètes Ki_H et Ki_S ainsi que les cryptogrammes SK_H* et SK_S* sont uniques pour chaque unité d'embrouillage utilisée dans le système 2. Ici les clés de session, dont les cryptogrammes sont enregistrés dans l'unité de désembrouillage du dispositif 7, ont été obtenues par diversification des mêmes clés racines SK_Root_H et SK_Root_S que celles utilisées pour l'unité 14 par un identifiant unique du dispositif 7. A l'inverse, les clés de session, dont les cryptogrammes sont enregistrés dans l'unité de désembrouillage du dispositif 8, ont été obtenues par diversification de clés racines différentes des clés racines SK_Root_H et SK_Root_S. Ainsi, comme on le comprendra à la lecture de la suite de cette description, les unités de désembrouillage des dispositifs 6 et 7 forment un groupe de deux entités apparié au processeur de sécurité 16. L'unité de désembrouillage du dispositif 8 n'appartient pas à ce groupe puisque ses clés de session ne sont pas obtenues par diversification des clés racines SK_Root_H et SK_Root_S caractéristiques de ce groupe.

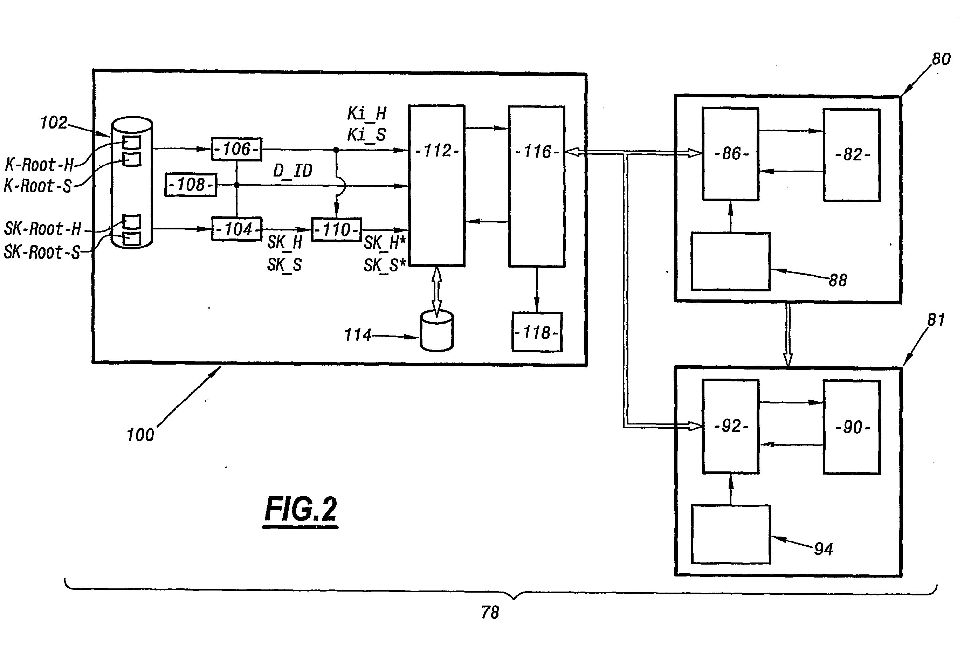

La figure 2 représente un système 78 de fabrication de l'unité de désembrouillage 14. Ce système 78 est conçu de manière à permettre au fabricant de l'unité 14 d'enregistrer dans la mémoire 46 le cryptogramme SK_H* déchiffrable par la clé Ki_H sans que cela nécessité que ce fabricant connaisse la clé Ki_H enregistrée dans la mémoire 26.

Le système 78 comporte une usine 80 de fabrication de circuits intégrés et une usine 81 de fabrication d'unités de désembrouillage incorporant les circuits intégrés fabriqués par l'usine 80. La structure des circuits intégrés fabriqués par l'usine 80 est identique à celle du circuit 24, et la structure des unités de désembrouillage fabriquées par l'usine 81 est identique à celle décrite pour l'unité 14. Les références des éléments structurels des circuits intégrés et des unités de désembrouillage fabriqués sont donc les mêmes que celles utilisées pour décrire le circuit intégré 24 et l'unité 14.

L'usine 80 est équipée d'une unité 82 de fabrication des circuits intégrés 24 à partir de matière brute telle que le silicium.

L'unité 82 est apte à enregistrer lors de la fabrication ou de la personnalisation du circuit 24 l'identifiant D_ID et la clé secrète Ki_H dans la mémoire 26. A cet effet, l'unité 82 est raccordée à une boîte noire 86 contenant l'identifiant D_ID et la clé secrète Ki_H à enregistrer dans chaque circuit intégré fabriqué.

La boîte noire 86 est apte à recevoir sous forme chiffrée la liste des identifiants D_ID et des clés secrètes associées Ki_H à enregistrer. Cette liste est chiffrée à l'aide d'une clé de chiffrement dite de transport unique pour l'usine 80. La clé de transport unique nécessaire au déchiffrement de cette liste est, par exemple, contenue dans une carte à puce 88 insérable dans la boîte noire 86.

L'usine 81 comporte une unité 90 de fabrication des unités 14 à l'aide des circuits 24 fabriqués par l'usine 80. Cette unité 90 est apte à enregistrer dans la mémoire 44 l'identifiant D ID, le cryptogramme SK_S* et la clé secrète Ki_S et dans la mémoire 46 le cryptogramme SK_H*. A cet effet, l'usine 81 comporte une boîte noire 92 apte à relever l'identifiant D_ID enregistré dans la mémoire 26 du circuit intégré utilisé pour fabriquer l'unité 14 et à transmettre en réponse les données à enregistrer dans les mémoires 44 et 46 de cette unité 14.

La boite 92 est également apte à recevoir la liste des identifiants D_ID, des cryptogrammes SK_H*, SK_S* et des clés secrètes Ki_S associés à enregistrer dans les mémoires 44 et 46. Cette liste est chiffrée à l'aide d'une clé de chiffrement dite de transport unique pour l'usine 81. La clé de transport unique permettant de déchiffrer la liste reçue est, par exemple, enregistrée dans une carte à puce 94 insérable dans la boite noire 92.

Le système 78 comporte également une autorité supérieure 100 propre à générer et à gérer une base de données centrale contenant l'ensemble des données à enregistrer dans les mémoires 26, 44 et 46. Cette autorité 100 comporte une mémoire sécurisée 102 contenant les clés racines SK_Root_H et SK_Root_S ainsi que deux clés racines supplémentaires K_Root_H et K_Root_S. Cette mémoire 102 est raccordée à des modules de diversification 104 et 106 propres à générer respectivement les clés de session SK_H et SK_S et les clés secrètes Ki_H et Ki_S.

Les modules 104 et 106 sont raccordés à un module 108 de génération d'identifiants D_ID.

Une sortie des modules 104 et 106 est également raccordée à des entrées correspondantes d'un module 110 de chiffrement des clés de session.

Des sorties des modules 106, 108 et 110 sont raccordées à un module 112 de création et de gestion de la base de données centrale 114 contenant pour chaque identifiant D_ID les cryptogrammes SK_H* et SK_S* associés ainsi que les clés secrètes Ki_H et Ki_S permettant de déchiffrer ces cryptogrammes pour obtenir les clés de session SK_H et SK_S.

Le module 112 est apte à transmettre, après chiffrement avec une clé de transport, les données à enregistrer respectivement aux boîtes noires 86 et 92. A cet effet, l'autorité 100 comporte un module de chiffrement 116 et une carte à puce 118 contenant la ou les clés de transport.

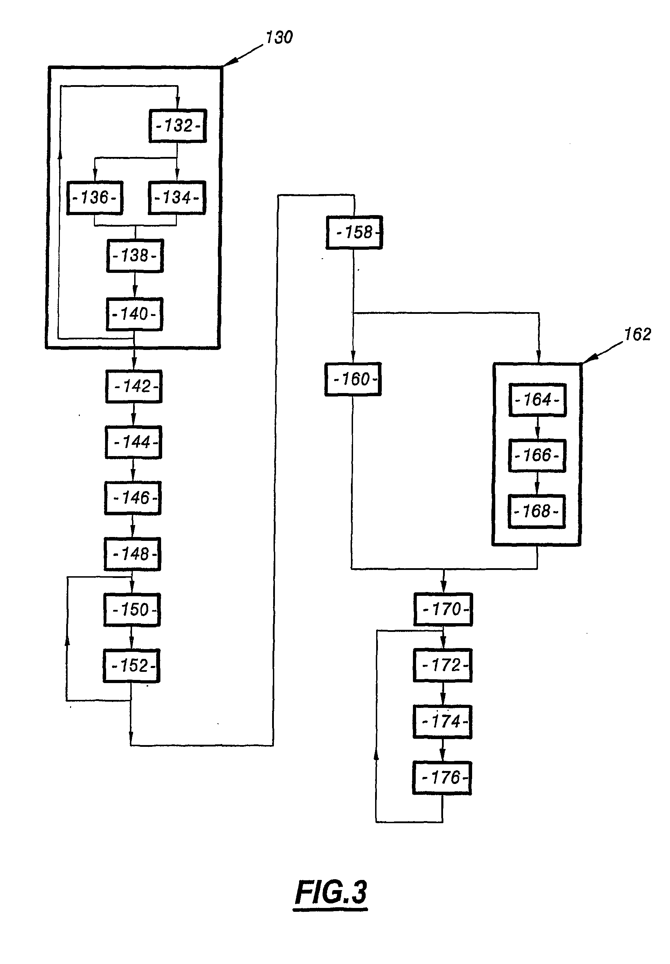

Le fonctionnement du système 78 permettant de fabriquer les unités de désembrouillage va maintenant être décrit en regard de la figure 3 dans le cas particulier de l'unité 14.

Initialement, avant la fabrication de l'unité 14, l'autorité 100 crée ou complète, lors d'une étape 130, la base de données 114. Plus précisément, lors d'une opération 132, le module 108 génère un identifiant D_ID. Cet identifiant D_ID est ensuite utilisé par le module 104, lors d'une opération 134, pour diversifier chacune des clés racines SK_Root_H et SK_Root_S afin d'obtenir respectivement les clés de session SK_H et SK_S associées à cet identifiant D_ID. Ainsi, les clés de session sont uniques pour chaque unité de désembrouillage du système 2.

En parallèle, lors d'une opération 136, le module 106 diversifie chacune des clés racines K_Root_H et K_Root_S à l'aide de l'identifiant D_ID pour obtenir respectivement les clés secrètes Ki_H et Ki_S associées à cet identifiant D_ID. Ainsi les clés Ki_H et Ki_S sont uniques pour chaque unité de désembrouillage du système 2.

Ensuite, lors d'une opération 138 le module 110 chiffre chacune des clés de session SK_H et SK_S à l'aide respectivement des clés secrètes associées Ki_H et Ki_S pour obtenir les cryptogrammes SK_H* et SK_S*. Les cryptogrammes SK_H* et SK_S* sont donc eux aussi uniques pour chaque unité de désembrouillage du système 2.

L'identifiant D_ID, les cryptogrammes SK_H* et SK_S* et les clés secrètes Ki_H et Ki_S sont associés et enregistrés par le module de gestion 112 dans la base de données 114, lors d'une opération 140.

Les opérations 132 à 140 sont réitérées pour chaque identifiant généré par le module 108 de manière à ce que la base de données 114 contienne au moins autant d'identifiants D_ID que d'unités de désembrouillage à fabriquer par l'usine 80.

Une fois que cette base de données 114 a été créée, une partie de la base de données 114, contenant uniquement les secrets nécessaires à la fabrication des circuits 24 est transmise sous forme chiffrée à la boîte noire 86. A cet effet, le module de gestion 112 extrait de la base 114, lors d'une étape 142, une liste de données contenant pour chaque identifiant D_ID la clé secrète Ki_H qui lui est associée. Cette liste de données est ensuite chiffrée, lors d'une étape 144, par le module 116 à l'aide de la clé de transport unique de l'usine 80 avant d'être transmise, lors d'une étape 146, à la boîte noire 86.

Lors de la réception de cette liste de données, la boîte noire 86 déchiffre, lors d'une étape 148, cette liste de données à l'aide de la clé de transport enregistrée dans la carte à puce 88.

Ensuite, lors d'une étape 150, la boîte noire 86 transmet l'identifiant D_ID et la clé secrète Ki_H à enregistrer dans un circuit intégré à l'unité de fabrication 82. Ces données peuvent être transmises avec un chiffrement local spécifique de l'unité de fabrication 82.

Lors d'une étape 152, l'unité de fabrication 82 enregistre dans la mémoire sécurisée 26 du circuit intégré fabriqué, l'identifiant D_ID et la clé secrète Ki__H associée transmis lors de l'étape 150.

Ici, l'identifiant D_ID et la clé secrète Ki_H sont différents pour chaque circuit intégré fabriqué.

Les étapes 150 à 152 sont réitérées pour chaque circuit intégré fabriqué par l'unité 82.

A la fin de la fabrication d'un lot de circuits intégrés, la boîte noire 86 transmet, lors d'une étape 158, à l'autorité 100 un compte rendu de la fabrication des circuits intégrés. Ce compte rendu contient la liste des identifiants D_ID utilisés lors des étapes 150 et 152.

Lors d'une étape 160, les circuits intégrés fabriqués par l'usine 80 sont livrés à l'usine 81.

En parallèle, l'autorité 100 transmet à l'usine 81, lors d'une étape 162, une liste contenant uniquement les informations nécessaires à la fabrication des unités 14. Plus précisément, lors d'une opération 164, le module 112 extrait de la base 114 une liste de données contenant pour chaque identifiant D_ID, les cryptogrammes SK_H* et SK_S* et la clé secrète Ki_S. Cette liste extraite est chiffrée, lors d'une opération 166, par le module 116 à l'aide de la clé de transport unique correspondant à celle enregistrée dans la carte à puce 94. Une fois chiffrée, cette liste est transmise, lors d'une opération 168, à la boîte 92.

La boîte noire 92 déchiffre, lors d'une étape 170, la liste transmise à l'aide de la clé de transport enregistrée dans la carte à puce 94.

Ensuite, lors d'une étape 172, au cours de la fabrication d'une unité 14, l'unité de fabrication 90 lit l'identifiant D_ID présent dans le circuit intégré utilisé pour fabriquer cette unité 14, et le transmet à la boîte noire 92. En réponse, lors d'une étape 174, la boîte noire 92 transmet à l'unité 90, les cryptogrammes SK_H* et SK_S* et la clé secrète Ki_S correspondant à l'identifiant D_ID transmis lors de l'étape 172. Ces données peuvent être transmises avec un chiffrement local spécifique de l'unité de fabrication 90.

Lors d'une étape 176 l'unité 90 enregistre les données transmises, lors de l'étape 174, dans les mémoires 44 et 46 de l'unité 14 en cours de fabrication.

Les étapes 172 à 176 sont réitérées pour chaque unité 14 fabriquée.

Ainsi, grâce à ce procédé de fabrication, l'unité 90 est apte à enregistrer le cryptogramme SK_H* déchiffrable à l'aide de la clé secrète Ki_H sans connaître cette clé secrète.

D'autre part, on notera que le fait de chiffrer les informations transmises de l'autorité 100 vers les usines 80 et 81 avec des clés de transport respectives permet d'éviter que les informations transmises, par exemple, à l'usine 80 soient utilisées par une autre usine de fabrication de circuits intégrés. En effet, cette autre usine de fabrication, même si elle est équipée d'une boîte noire identique à la boîte noire 86, ne connaît pas la clé de transport permettant de déchiffrer les informations qui ne lui sont pas destinées.

Ce chiffrement réalisé par le module 116 rend donc les informations transmises aux usines non interchangeables.

Une fois fabriquées, les unités 14 sont vendues et incorporées dans des dispositifs de réception tel que le dispositif 6.

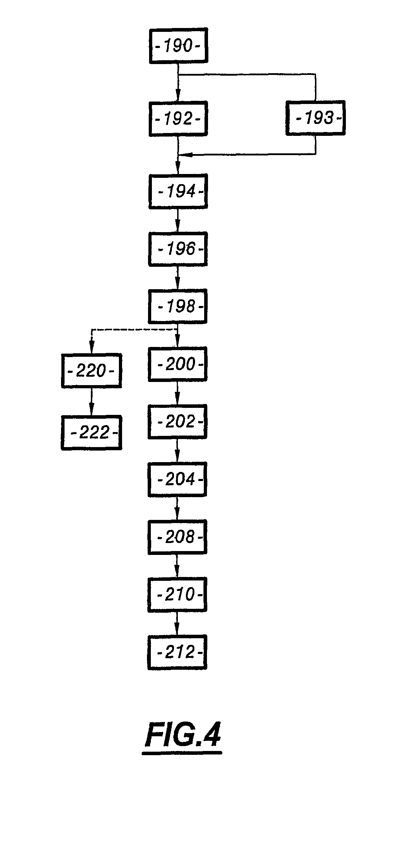

Le fonctionnement du dispositif de réception 6 va maintenant être décrit en regard du procédé de la figure 4.

Lors de l'insertion du processeur de sécurité 16 dans l'unité 14, le module 58 sélectionne, lors d'une étape 190, le mode de protection matérielle ou logicielle du mot de contrôle à activer. A cet effet, lors de l'étape 190, le module 58 échange, par exemple, des informations avec l'unité 14 pour choisir le mode de protection à activer.

Dans un premier exemple, le mode de protection a été mémorisé préalablement dans le processeur de sécurité 16 lors de la personnalisation de celui-ci ou par un message EMM reçu précédemment. Le processeur de sécurité 16 impose ce mode de protection à l'unité 14, lors de l'étape 190, via le module 58. Si l'unité 14 ne supporte pas le mode de protection ainsi imposé, le dialogue entre les deux entités s'arrête à l'initiative de l'une ou de l'autre des deux entités.

Dans un deuxième exemple, lors de l'étape 190, le mode de protection est sélectionné en appliquant la règle suivante :
- si l'unité de désembrouillage est apte à mettre en oeuvre à la fois le mode de protection matérielle et le mode de protection logicielle ou encore si l'unité de désembrouillage est uniquement apte à mettre en oeuvre le mode de protection matérielle, alors seul le mode de protection matérielle du mot de contrôle est sélectionné ;
- si l'unité de désembrouillage est uniquement apte à mettre en oeuvre le mode de protection logicielle du mot de contrôle, alors seul le mode de protection logicielle est sélectionné.

Ensuite, lors d'une étape 192, le module 58 communique avec le module 40 pour activer le mode de protection sélectionné lors de l'étape 190.

En parallèle, lors d'une étape 193, le module de diversification 54 sélectionne uniquement la clé racine SK_Root_H si le mode de protection matérielle est activé ou uniquement la clé racine SK_Root_S si le mode de protection logicielle est activé.

Dans le cas de l'unité 14 décrite en regard de la figure 1, seul le mode de protection matérielle est activé.

Lors de l'initialisation du processeur 16, une fois que le mode de protection a été choisi, le module 38 transmet sous forme non chiffrée, lors d'une étape 194, l'identifiant D_ID de l'unité 14 au module de diversification 54.

En réponse, lors d'une étape 196, le module 54 diversifie la clé racine SK_Root_H sélectionnée lors de l'étape 193, à l'aide de l'identifiant D_ID pour obtenir la clé de session SK_H.

Par exemple, lors de l'étape 196, le module 54 chiffre l'identifiant D_ID à l'aide de la clé racine SK_Root_H. L'identifiant D_ID ainsi chiffré est ensuite combiné avec la constante C et le résultat de cette combinaison est de nouveau chiffré à l'aide de la clé SK_Root_H afin d'obtenir la clé SK_H.

Toujours lors de l'initialisation, lors d'une étape 198, le module 30 déchiffre le cryptogramme SK_H* contenu dans la mémoire 46 à l'aide de la clé secrète Ki_H contenue dans la mémoire 26 afin d'obtenir la clé de session SK_H.

Ensuite, lors de la réception de messages ECM, le module 50 extrait et déchiffre, lors d'une étape 200, les mots de contrôle contenus dans les messages ECM qui lui sont transmis par le récepteur et par l'intermédiaire de l'unité 14. Ces mots de contrôles extraits déchiffrés lors de l'étape 200, sont ensuite chiffrés, lors d'une étape 202, par le module 52, à l'aide de la clé SK_H obtenue lors de l'étape 196. Le cryptogramme CW* résultant de l'étape de chiffrement 202 est ensuite transmis, lors d'une étape 204, à l'unité 14.

A chaque fois qu'un mot de contrôle chiffré est reçu par l'unité 14, le module 28 déchiffre, lors d'une étape 208, le mot de contrôle chiffré à l'aide de la clé de session obtenue lors de l'étape 198.

Le mot de contrôle ainsi déchiffré est alors communiqué au désembrouilleur 22 qui, lors d'une étape 210, désembrouille les signaux multimédias embrouillés et les communique à l'unité d'affichage 20 par l'intermédiaire du récepteur 10.

Lors d'une étape 212, l'unité d'affichage 20 affiche les signaux multimédias désembrouillés par l'unité 14.

A tout moment après l'initialisation du processeur 16, celui-ci peut recevoir, lors d'une étape 220, une commande d'appariement fort, par exemple, contenu dans un message EMM.

Dès lors, en réponse à une telle commande, le module 60 rend inutilisable, lors d'une étape 222, la clé racine de manière à figer la clé de session. Par exemple ici, la clé racine SK_Root_H est remplacée par la clé de session courante, c'est-à-dire ici SK_H.

Dès lors, le processeur 16 ne peut plus être utilisé dans une autre unité de désembrouillage que l'unité 14. En effet, après l'étape 222, le processeur 16 n'est plus capable d'obtenir une clé de session identique à celle utilisée par une nouvelle unité de désembrouillage correspondant à un identifiant D_ID différent de celui de l'unité 14.

Le fonctionnement du processeur 16 et de l'unité 14, dans le cas où seule la protection logicielle du mot de contrôle serait activée se déduit de celui qui vient d'être décrit en regard des étapes 190 à 212 en remplaçant :
- les modules de déchiffrement 28 et 30 respectivement par les modules de déchiffrement 35 et 36 ;
- la clé racine SK_Root_H par la clé racine SK_Root_S ;
- le cryptogramme SK_H* par le cryptogramme SK_S* ;
- et la clé secrète Ki_H par la clé secrète Ki_S.

Le fonctionnement des dispositifs 7 et 8 se déduit du fonctionnement du dispositif 6. En particulier, si le processeur 16 est inséré dans l'unité de désembrouillage du dispositif 7 alors, le procédé qui vient d'être décrit en regard de la figure 4 se déroule de façon identique et les signaux multimédias sont correctement désembrouillés, sauf si l'appariement fort a été activé dans le processeur 16.

Par contre, si le processeur 16 est inséré dans l'unité de désembrouillage du dispositif 8, les clés de session obtenues par cette unité de désembrouillage et le processeur 16 sont différentes puisque la clé de session de l'unité de désembrouillage du dispositif 8 n'est pas obtenue par diversification de l'une des clés racines SK_Root_H ou SK_Root_S. Par conséquent, le dispositif 8 ne déchiffre pas correctement le mot de contrôle reçu du processeur 16 et il obtient ainsi une valeur erronée du mot de contrôle qui ne permet pas de désembrouiller correctement les signaux multimédias. On vérifie ainsi que le processeur 16 est effectivement apparié avec l'une quelconque des unités de désembrouillage des dispositifs 6 et 7, mais n'est pas apparié avec l'unité de désembrouillage du dispositif 8.

On notera que pour chaque paire de processeur de sécurité/unité de désembrouillage, la clé de session utilisée est unique pour cette paire puisque celle-ci dépend de l'identifiant de l'unité de désembrouillage. Ceci présente un avantage. En effet, si le mot de contrôle chiffré par le processeur 16 lorsqu'il est inséré dans l'unité 14 est intercepté puis transmis à une autre unité de désembrouillage appartenant au même groupe que l'unité 14, tel que, par exemple, l'unité de désembrouillage du dispositif 7, cette autre unité de désembrouillage ne sera pas capable de déchiffrer le mot de contrôle intercepté. Dés lors, il n'est pas possible de faire marcher plusieurs unités de désembrouillage à partir des informatisons transmises par un seul processeur de sécurité.

De nombreux autres modes de réalisation du système 78 et du procédé de la figure 3 sont possibles. Par exemple, en variante, un numéro de série H_ID du circuit intégré par l'unité de fabrication 82 est utilisé à la place de l'identifiant D_ID. Dans cette variante, la boîte 86 relève le numéro de série H_ID du circuit intégré et l'associe à la clé secrète Ki_H enregistrée dans sa mémoire 26. Le numéro de série du circuit intégré est alors transmis à l'autorité 100 dans le compte rendu pour que celui-ci puisse être utilisé en association avec l'identifiant D_ID.

De nombreux autres modes de réalisation du système 2 et du procédé de la figure 4 sont également possibles.

Ici, l'entité 14 établit la clé de session sans utiliser de module de diversification. En variante, cette entité 14 comporte un module de diversification et une clé racine identique à celle contenue dans l'entité 16, de manière à obtenir la clé de session par diversification de cette clé racine.

Les unités de désembrouillage ont été décrites comme étant amovibles. En variante, elles sont solidaires et fixées au récepteur.

Ici, l'unité de désembrouillage 14 a été décrite dans le cas très particulier où elle est apte à mettre en oeuvre aussi bien un mode de protection matérielle que logicielle. Toutefois, en variante, cette unité de désembrouillage est uniquement apte à mettre en oeuvre l'un de ces deux modes de protection. Par exemple, si l'unité de désembrouillage met uniquement en oeuvre le mode de protection logiciel, alors l'unité de désembrouillage est dépourvue de circuit intégré 24, de mémoire sécurisée 26 et de la mémoire non sécurisée 46. De même, le système de fabrication d'une telle unité de désembrouillage est simplifiée puisque la boîte noire 86 peut être omise et l'usine 80 supprimée. Par contre le système de la figure 2 doit être modifié pour que la boîte noire 92 transmette uniquement l'identifiant D_ID, le cryptogramme SK_S* et la clé secrète Ki_S.

A l'inverse, si l'unité de désembrouillage met uniquement en oeuvre le mode de protection matérielle, alors l'unité de désembrouillage est dépourvue des modules de déchiffrement 35 et 36 et de la mémoire 44. Le système de fabrication d'une telle unité de désembrouillage diffère uniquement du système 78 par le fait que celui-ci est modifié pour que la boîte noire 92 transmette uniquement le cryptogramme SK_H* à enregistrer dans la mémoire 46.

Ici, l'algorithme de déchiffrement du mot de contrôle est différent de celui utilisé pour déchiffrer la clé de session. En variante, ces algorithmes sont identiques, de sorte qu'un seul module de déchiffrement est nécessaire au lieu de deux.

Dans le système 2, l'identifiant D_ID est transmis au processeur 16 lors de son insertion dans l'unité 14. En variante, l'identifiant D_ID peut être transmis au processeur 16 par l'intermédiaire d'un message EMM. Il est également possible, dans une autre variante, d'enregistrer l'identifiant D_ID dans la mémoire 56 du processeur 16 en même temps que les clés racines SK_Root_S et SK_Root_H sont enregistrées dans cette mémoire. Dans ces conditions, un appariement entre le processeur 16 et l'unité 14 est créé avant même que le processeur 16 ait été inséré pour la première fois dans l'unité 14.

Si nécessaire, l'une ou les deux clés racines SK_Root_H et SK_Root_S peuvent être remplacées par de nouvelles clés racines. En parallèle à un tel remplacement des clés racines, les cryptogrammes SK_H* et SK_S* doivent également être remplacés par de nouveaux cryptogrammes. Ces nouveaux cryptogrammes sont obtenus par diversification des nouvelles clés racines. Ces nouvelles clés peuvent, par exemple, être mises à jour dans le processeur 16 et dans l'unité 14 par messages EMM. Cette modification des clés racines est, par exemple, utile après la mise en oeuvre d'un appariement fort pour rendre de nouveau le processeur 16 utilisable dans une autre unité de désembrouillage.

En variante, l'appariement fort entre le processeur de sécurité et l'unité de désembrouillage est obtenu en rendant l'identifiant D_ID inutilisable par l'une de ces deux entités à apparier. Par exemple, le dernier identifiant D_ID utilisé pour créer une clé de session est figé, c'est-à-dire que cet identifiant D_ID n'est plus modifiable. Dès lors, si le processeur de sécurité est inséré dans une autre unité de désembrouillage, le nouvel identifiant D_ID transmis n'est pas utilisé pour diversifier la clé racine et la clé de session obtenue est incorrecte.

Ici, les clés racine SK_ROOT_H et SK_ROOT_S ont été décrites comme étant communes à l'ensemble des unités de désembrouillage d'un même groupe et aux processeurs de sécurité qui leurs sont appariés. Toutefois, en variante, la clé racine SK_ROOT_H est commune aux unités de désembrouillage et aux processeurs de sécurité d'un premier groupe, tandis que la clé racine SK_ROOT_S est commune aux unités de désembrouillage et aux processeurs de sécurité d'un second groupe différent du premier. Ainsi, il est possible de définir différents appariements selon que le mode de protection matérielle ou logicielle est mis en oeuvre.

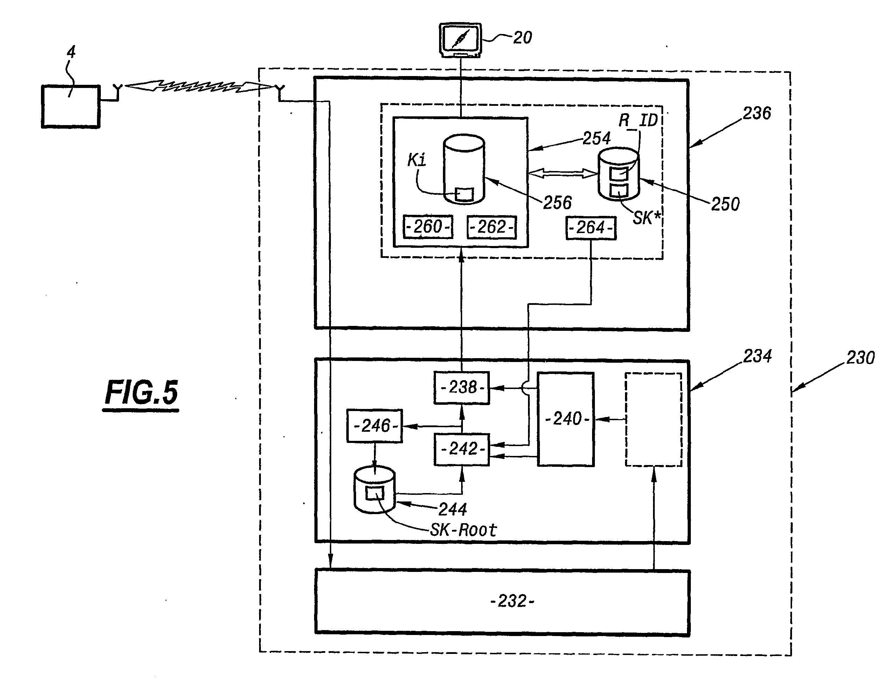

Ce qui a été décrit pour chiffrer et déchiffrer les mots de contrôle transmis entre un processeur de sécurité et une unité de désembrouillage peut également être appliqué pour chiffrer un signal multimédia desembrouillé transmis entre l'unité de désembrouillage et le récepteur. Par exemple, la figure 5 représente un dispositif de réception 230 dans lequel les mots de contrôle transmis par un processeur de sécurité 232 vers une unité de désembrouillage 234 sont chiffrés ainsi que les signaux multimédias désembrouillés transmis de l'unité 234 vers un récepteur 236. Sur la figure 5, les éléments déjà décrits en regard de la figure 1 portent les mêmes références. De plus, les modules nécessaires à l'établissement d'une clé de session entre le processeur de sécurité 232 et l'unité de désembrouillage 234 ainsi qu'au chiffrement des mots de contrôle sont identiques à ceux décrits en regard de la figure 1 et ont été omis pour simplifier la figure 5.

Dans ce mode de réalisation, l'unité 234 comporte un module de chiffrement 238 apte à chiffrer les signaux multimédias désembrouillés par un désembrouilleur 240, à l'aide d'une clé de session SK.

L'unité 234 comporte également un module de diversification 242 apte à diversifier une clé racine SK_Root contenue dans une mémoire 244 pour obtenir la clé de session SK.

Comme le processeur 16, l'unité 234 comporte aussi un module 246 d'appariement fort propre à remplacer la clé racine SK_Root par la clé SK en réponse à une commande d'appariement fort.

De son côté, le récepteur 236 comporte une mémoire 250 contenant un identifiant R_ID et un cryptogramme SK* de la clé de session SK obtenue en chiffrant celle-ci à l'aide d'une clé secrète Ki. La mémoire 250 est non sécurisée. Le récepteur 236 comporte aussi un circuit intégré de sécurité 254 équipé d'une mémoire sécurisée 256 contenant au moins la clé secrète Ki. Ce circuit intégré 254 comporte également un module 260 de déchiffrement des signaux multimédias chiffrés et un module de déchiffrement 262 du cryptogramme SK*.

Enfin, le récepteur 236 comporte un module 264 de transmission de l'identifiant R_ID à l'unité 234.

Comme dans le système 2, il est possible de créer un groupe de récepteurs apparié à l'unité de désembrouillage 234. A cet effet, tous les récepteurs appartenant au même groupe que celui contenant le récepteur 236 contiennent un cryptogramme d'une clé de session obtenue par diversification de la clé racine SK_Root par leur propre identifiant R_ID.

L'initialisation des clés de session dans le récepteur 236 et dans l'unité 234 se fait de façon identique à ce qui a été décrit pour l'initialisation d'une clé de session entre l'unité 14 et le processeur 16 et ne sera donc pas décrite ici en détail. De même, une fois que des clés de session identiques ont été initialisées dans le récepteur 236 et dans l'unité 234, le chiffrement des signaux multimédias désembrouillés se réalise de façon similaire à ce qui a été décrit pour le mot de contrôle.

Si une même unité 234 initialise des clés de session avec le récepteur 236 d'une part et avec un processeur 16 d'autre part, les clés racine, les identifiants et les algorithmes de diversification n'ont pas l'obligation d'être les mêmes sur les deux interfaces.

Si l'unité 234 est utilisée dans un récepteur qui n'appartient pas au groupe de récepteurs contenant le récepteur 236, alors, les clés de session obtenues par l'unité 234 et par cet autre récepteur ne sont pas identiques de sorte que cet autre récepteur est incapable de déchiffrer correctement les signaux multimédias chiffrés par l'unité 234. Ainsi, un affichage des signaux multimédias correct est obtenu uniquement lorsque l'unité 234 est utilisée dans l'un des récepteurs du même groupe que celui contenant le récepteur. 236.

Dans le mode de réalisation de la figure 5, seul le mode de protection matérielle de l'interface entre le récepteur et l'unité de désembrouillage a été décrit. Toutefois comme pour la protection de l'interface entre l'unité de désembrouillage et le processeur de sécurité, un mode de protection logicielle peut être implémenté.

Les variantes décrites ci-dessus pour la protection de l'interface unité de désembrouillage/processeur de sécurité s'appliquent également pour la protection de l'interface récepteur/unité de désembrouillage.

Ce qui a été décrit en regard des figures 2 et 3 pour isoler les données secrètes transmises au fabricant du circuit intégré de sécurité de celles transmises à l'usine qui utilise ces circuits intégrés est adapté, en variante, à la fabrication du récepteur 236. Dans ce cas, l'unité de fabrication 90 est remplacée par une unité de fabrication de récepteurs 236.

## Revendications

1. Procédé de réception d'un signal multimédia embrouillé à l'aide d'un mot de contrôle, en utilisant une première entité cryptographique apte à être raccordée à l'une quelconque de P secondes entités cryptographiques pour former une partie d'un dispositif de réception du signal multimédia embrouillé, la première entité étant soit un processeur de sécurité soit une unité de désembrouillage, dans lequel, lorsque la première entité est raccordée avec l'une des secondes entités, la première entité chiffre (en 202) le mot de contrôle ou le signal multimédia désembrouillé à l'aide d'une clé de session puis transmet (en 204) le mot de contrôle chiffré ou le signal multimédia chiffré à la seconde entité, et cette seconde entité déchiffre (en 208) le mot de contrôle chiffré ou le signal multimédia chiffré transmis par la première entité à l'aide d'une clé de session, les clés de session de la première et de la seconde entités étant obtenues par diversification de clés racines à l'aide d'un même identifiant (D-ID) connu à la fois de la première et de la seconde entités,
**caractérisé en ce que** seules les secondes entités d'un groupe de N secondes entités choisies dans l'ensemble plus vaste des P secondes entités utilisent une clé de session (SK_H, SK_S) obtenue par diversification d'une clé racine (SK_Root_H, SK_Root_S) commune et identique à la clé racine (SK_Root_H, SK_Root_S) utilisée pour obtenir la clé de session de la première entité, N étant un nombre de secondes entités strictement inférieur à P et strictement supérieur à 1.

2. Procédé selon la revendication 1, pour une première entité ou une seconde entité équipée d'un module de diversification de la clé racine pour obtenir la clé de session, **caractérisé en ce que** après le raccordement de la première entité à l'une des secondes entités dudit groupe au moins l'une de la première ou de la seconde entité diversifie (en 196) la clé racine mémorisée par ledit identifiant pour obtenir la clé de session en utilisant le module de diversification puis rend (en 222) ensuite ce module de diversification inutilisable pour la création d'une nouvelle clé de session de manière à apparier cette entité uniquement à l'autre entité à laquelle elle est raccordée.

3. Procédé selon la revendication 2, **caractérisé en ce que** le module de diversification est rendu inutilisable en rendant inutilisable la clé racine à diversifier.

4. Procédé selon l'une quelconque des revendications précédentes, **caractérisé en ce que** après le raccordement de la première entité à l'une des secondes entités, l'une de la première ou de la seconde entité transmet (en 194) l'identifiant vers l'autre entité sous forme non chiffré.

5. Procédé selon l'une quelconque des revendications précédentes pour des secondes entités aptes à mettre en oeuvre un mode de protection matérielle et/ou logicielle de l'interface avec la première entité, **caractérisé en ce que** après le raccordement de la première entité à l'une de ces secondes entités, la première entité sélectionne la clé de session ou la clé racine permettant d'obtenir la clé de session à utiliser en fonction du mode de protection que la première entité impose à la seconde entité ou mis en oeuvre par la seconde entité.

6. Procédé selon l'une quelconque des revendications précédentes, **caractérisé en ce que** si la première entité est un processeur de sécurité, la seconde entité est une unité de désembrouillage ou **en ce que** si la première entité est une unité de désembrouillage, la seconde entité est un récepteur de signaux multimédias embrouillés.

7. Seconde entité cryptographique, cette seconde entité étant apte :
- à être raccordée à une première entité cryptographique pour former une partie d'un dispositif de réception d'un signal multimédia embrouillé, la première entité cryptographique étant soit un processeur de sécurité, soit une unité de désembrouillage, et
- à déchiffrer un mot de contrôle chiffré ou un signal multimédia chiffré transmis par la première entité à l'aide d'une clé de session, **caractérisée en ce que** la clé de session utilisée par la seconde entité est obtenue par diversification d'une clé racine commune et identique à la clé racine utilisée pour obtenir les clés de session d'un groupe de N secondes entités choisie dans un ensemble plus vaste de P secondes entités, N étant un nombre de secondes entités strictement inférieur à P et strictement supérieur à 1.

8. Seconde entité selon la revendication 7, **caractérisée en ce qu'**elle comporte une mémoire non sécurisée (44, 46) contenant au moins un cryptogramme préenregistré de la clé de session.

9. Seconde entité selon la revendication 7, adaptée pour être raccordée à une première entité qui est apte à diversifier la clé racine par un identifiant pour obtenir la clé de session, **caractérisée en ce que** la seconde entité comporte un module (38) de transmission apte à transmettre l'identifiant sous forme non chiffrée vers la première entité après le raccordement de la première entité à cette seconde entité.

10. Seconde entité selon la revendication 8,
**caractérisée en ce qu'**elle comporte un circuit intégré (24) de sécurité à l'intérieur duquel se trouve une mémoire sécurisée (26) contenant au moins une clé de déchiffrement et un premier algorithme (28) de déchiffrement d'un cryptogramme préenregistré pour obtenir la clé de session, et un second algorithme de déchiffrement du mot de contrôle chiffré ou du signal multimédia chiffré transmis par la première entité à l'aide de la clé de session déchiffrée par le premier algorithme.

11. Seconde entité selon l'une quelconque des revendications 8 à 10, **caractérisée en ce que** la seconde entité comporte :
- une mémoire (46) non sécurisée dans laquelle est enregistré un cryptogramme de la clé de session, ce cryptogramme ayant été obtenu en chiffrant la clé de session avec une clé secrète, et
- un circuit intégré (24) de sécurité contenant :
a) une mémoire sécurisée (26) dans laquelle est enregistrée la clé secrète, et
b) un algorithme (30) de déchiffrement du cryptogramme à l'aide de la clé secrète.

12. Seconde entité selon l'une quelconque des revendications 7 à 11, dans laquelle si la première entité est un processeur de sécurité, la seconde entité est une unité de désembrouillage ou dans laquelle si la première entité est une unité de désembrouillage, la seconde entité est un récepteur de signaux multimédias embrouillés.

13. Système de réception d'un signal multimédia embrouillé à l'aide d'un mot de contrôle, ce système comportant au moins une première entité cryptographique (16 ; 234) et P secondes entités cryptographiques (14 ; 236) conformes à l'une quelconque des revendications 7 à 12,
la première entité cryptographique étant soit un processeur de sécurité, soit une unité de désembrouillage, apte à être raccordée à l'une quelconque des P secondes entités cryptographiques pour former une partie d'un dispositif de réception du signal multimédia embrouillé, la première entité étant apte à chiffrer le mot de contrôle ou le signal multimédia désembrouillé à l'aide d'une clé de session et à transmettre le mot de contrôle chiffré ou le signal multimédia ainsi chiffré à la seconde entité à laquelle ladite première entité est raccordée, chaque seconde entité étant apte à déchiffrer le mot de contrôle chiffré ou le signal multimédia chiffré transmis par la première entité à l'aide d'une clé de session, les clés de session de la première et de la seconde entités étant obtenues par diversification d'une clé racine à l'aide d'un même identifiant
**caractérisée en ce que** seules les secondes entités d'un groupe de N secondes entités choisies dans l'ensemble plus vaste des P secondes entités sont aptes à utiliser une clé de session (SK_H, SK_S) obtenue par diversification d'une clé racine (SK_Root_H, SK_Root_S) commune et identique à la clé racine (SK_Root_H, SK_Root_S) utilisée pour obtenir la clé de session (SK_H, SK_S) de la première entité, N étant un nombre de secondes entités strictement inférieur à P et strictement supérieur à 1.

14. Système de fabrication d'une seconde entité cryptographique conforme aux revendications 7 et 11 prises ensemble, **caractérisé en ce que** ce système comporte :
- une base de données centrale (114) dans laquelle est enregistré, pour chaque circuit intégré de sécurité utilisable pour la fabrication de la seconde entité, un identifiant unique de ce circuit intégré associé au cryptogramme obtenu en chiffrant la clé de session avec la clé secrète déjà préenregistrée dans la mémoire sécurisée de ce circuit intégré,
- une première unité (90) de fabrication de la seconde entité à l'aide d'un circuit intégré de sécurité (24) comportant l'identifiant unique de ce circuit intégré et la mémoire sécurisée (26) dans laquelle est déjà préenregistrée la clé secrète, cette première unité de fabrication étant apte à enregistrer dans la mémoire non sécurisée (46) de la seconde entité le cryptogramme de la clé de session,
- une première boîte noire (92) apte :
1) à relever l'identifiant unique du circuit intégré utilisé pour la fabrication de la seconde entité, et
2) à transmettre à la première unité de fabrication, en réponse, le cryptogramme associé à l'identifiant relevé dans la base de données centrale pour que la première unité de fabrication puisse enregistrer ce cryptogramme dans la mémoire non sécurisée (46) de cette seconde entité.

15. Système selon la revendication 14, **caractérisé en ce qu'**il comporter :
- une seconde unité (82) de fabrication de circuits intégrés de sécurité, cette seconde unité de fabrication étant apte à enregistrer dans la mémoire sécurisée de chaque circuit intégré fabriqué, la clé secrète et l'identifiant unique du circuit intégré, et
- une seconde boîte noire (86) apte à transmettre à la seconde unité de fabrication l'identifiant du circuit intégré et la clé secrète à enregistrer dans la mémoire sécurisée du circuit intégré fabriqué.

16. Procédé de fabrication d'une seconde entité cryptographique pour la mise en oeuvre d'un procédé de réception conforme à l'une quelconque des revendications 1 à 6, **caractérisé en ce que** ce procédé comporte :
- la fourniture d'un circuit intégré de sécurité contenant :
a) une mémoire sécurisée (26) dans laquelle est préenregistrée une clé secrète,
b) un algorithme de déchiffrement d'un cryptogramme à l'aide de la clé secrète, et
c) un identifiant unique de ce circuit intégré de sécurité,
- une étape (159) d'enregistrement dans une base de données centrale, pour chaque circuit intégré de sécurité utilisable pour la fabrication de la seconde entité, de l'identifiant unique de ce circuit intégré associé au cryptogramme obtenu en chiffrant la clé de session avec la clé secrète déjà préenregistrée dans la mémoire sécurisée de ce circuit intégré, cette clé de session ayant été obtenue par diversification d'une clé racine identique à la clé racine utilisée pour obtenir la clé de session du groupe des N secondes entités,
- lors de la fabrication de la seconde entité à l'aide d'un circuit intégré de sécurité comportant l'identifiant unique de ce circuit intégré et la mémoire sécurisée dans laquelle est déjà préenregistrée la clé secrète :
a) une première boîte noire relève (en 172) l'identifiant unique du circuit intégré utilisé pour la fabrication de la seconde entité et transmet (en 174), en réponse, le cryptogramme associé à l'identifiant relevé dans la base de données centrale à une première unité de fabrication de la seconde entité, et
b) la première unité de fabrication enregistre (en 176) le cryptogramme transmis dans une mémoire non sécurisée de la seconde entité.

17. Procédé selon la revendication 18, **caractérisé en ce que** :
- une seconde boîte noire transmet à une seconde unité de fabrication de circuit intégré, l'identifiant de chaque circuit intégré et la clé secrète à enregistrer dans la mémoire sécurisée du circuit intégré fabriqué, et
- la seconde unité de fabrication enregistre la clé secrète et l'identifiant unique du circuit intégré transmis par la seconde boîte noire dans la mémoire sécurisée du circuit intégré fabriqué.

## Claims

1. A method of receiving a multimedia signal which has been scrambled with the aid of a control word, using a first cryptographic unit suitable for connection to any of *P* second cryptographic units to form part of a device for receiving the scrambled multimedia signal, the first unit being either a security processor or a descrambling unit, in which, when the first unit is connected to one of the second units, the first unit encrypts (in 202) the control word or the descrambled multimedia signal with the aid of a session key, then (in 204) transmits the encrypted control word or the encrypted multimedia signal to the second unit, and this second unit decrypts (in 208) the encrypted control word or encrypted multimedia signal transmitted by the first unit with the aid of a session key, the session keys of the first and the second unit being obtained by diversification of root keys with the aid of a single identifier (D-ID) which is known to both the first and the second unit,
**characterised in that** only the second units of a group of *N* second units which are selected from the larger group of *P* second units use a session key (SK_H, SK_S) obtained by diversification of a common root key (SK_Root_H, SK_Root_S) which is identical to the root key (SK_Root_H, SK_Root_S) used to obtain the session key of the first unit, where *N* is a number of second units strictly smaller than *P* and strictly greater than 1.

2. A method according to Claim 1, for a first unit or a second unit equipped with a module for diversification of the root key to obtain the session key, **characterised in that,** after the first unit has been connected to one of the second units of the said group, at least either the first or the second unit diversifies (in 196) the root key stored by the said identifier to obtain the session key, using the diversification module, and then (in 222) makes this diversification module unusable in the creation of a new session key, such that this unit is matched solely to the other unit to which it is connected.

3. A method according to Claim 2, **characterised in that** the diversification module is made unusable by making the root key for diversification unusable.

4. A method according to any of the preceding claims,
**characterised in that,** once the first unit has been connected to one of the second units, either the first or the second unit transmits (in 194) the identifier to the other unit in unencrypted form.

5. A method according to any of the preceding claims for second units suitable for applying a mode of hardware and/or software protection for the interface with the first unit,
**characterised in that**, once the first unit has been connected to one of these second units, the first unit selects the session key or the root key, enabling the session key which is to be used to be obtained as a function of the protection mode that the first unit imposes on the second unit, or that the second unit applies.

6. A method according to any of the preceding claims,
**characterised in that** if the first unit is a security processor the second unit is a descrambling unit, or **in that** if the first unit is a descrambling unit the second unit is a receiver of scrambled multimedia signals.

7. A second cryptographic unit, this second unit being suitable:
- for connection to a first cryptographic unit for forming part of a device for receiving a scrambled multimedia signal, the first cryptographic unit being either a security processor or a descrambling unit, and
- for decrypting an encrypted control word or an encrypted multimedia signal which is transmitted by the first unit with the aid of the session key, **characterised in that** the session key used by the second unit is obtained from diversification of a common root key identical to the root key that is used to obtain the session keys of a group of *N* second units that are selected from a larger group of *P* second units, where *N* is a number of second units strictly smaller than *P* and strictly greater than 1.

8. A second unit according to Claim 7, **characterised in that** it includes an unsecured memory (44, 46) containing at least one pre-recorded cryptogram of the session key.

9. A second unit according to Claim 7, adapted to be connected to a first unit which is suitable for diversification of the root key by an identifier to obtain the session key, **characterised in that** the second unit includes a transmission module (38) suitable for transmitting the identifier in unencrypted form to the first unit, once the first unit has been connected to this second unit.

10. A second unit according to Claim 8, **characterised in that** it includes a security integrated circuit (24), within which there is a secured memory (26) containing at least one decryption key and a first algorithm (28) for decrypting a pre-recorded cryptogram to obtain the session key, and a second algorithm for decrypting the encrypted control word or encrypted multimedia signal transmitted by the first unit with the aid of the session key decrypted by the first algorithm.

11. A second unit according to any of Claims 8 to 10,
**characterised in that** the second unit includes:
- an unsecured memory (46) in which there is recorded a cryptogram of the session key, this cryptogram having been obtained by encrypting the session key with a secret key, and
- a security integrated circuit (24) containing:
a) a secured memory (26) in which the secret key is recorded, and
b) an algorithm (30) for decrypting the cryptogram with the aid of the secret key.

12. A second unit according to any of Claims 7 to 11, in which if the first unit is a security processor the second unit is a descrambling unit, or in which if the first unit is a descrambling unit the second unit is a receiver of scrambled multimedia signals.

13. A system for receiving a scrambled multimedia signal with the aid of a control word, this system including at least a first cryptographic unit (16; 234) and *P* second cryptographic units (14; 236) according to any of Claims 7 to 12,
the first cryptographic unit being either a security processor or a descrambling unit and suitable for connection to any of the *P* second cryptographic units to form part of a device for receiving the scrambled multimedia signal, the first unit being suitable for encrypting the control word or the descrambled multimedia signal with the aid of a session key and for transmitting the encrypted control word or the multimedia signal encrypted in this way to the second unit to which the said first unit is connected, each second unit being suitable for decrypting the encrypted control word or the encrypted multimedia signal transmitted by the first unit with the aid of a session key, the session keys of the first and the second unit being obtained by diversification of a root key with the aid of a single identifier,
**characterised in that** only the second units of a group of *N* second units which are selected from the larger group of *P* second units are suitable for using a session key (SK_H, SK_S) which is obtained by diversification of a common root key (SK_Root_H, SK_Root_S) which is identical to the root key (SK_Root_H, SK_Root_S) used to obtain the session key (SK_H, SK_S) of the first unit, where *N* is a number of second units strictly smaller than *P* and strictly greater than 1.

14. A system for manufacturing a second cryptographic unit according to Claims 7 and 11, when taken together,
**characterised in that** this system includes:
- a central database (114) in which there is recorded, for each security integrated circuit that can be used for manufacturing the second unit, a unique identifier of this integrated circuit that is associated with the cryptogram obtained by encrypting the session key with the secret key already pre-recorded in the secured memory of this integrated circuit,
- a first unit (90) for manufacturing the second unit with the aid of a security integrated circuit (24) including the unique identifier of this integrated circuit and the secured memory (26) in which the secret key is already pre-recorded, this first manufacturing unit being suitable for recording in the unsecured memory (46) of the second unit the cryptogram of the session key,
- a first black box (92) suitable:
1) for taking the unique identifier of the integrated circuit used for manufacturing the second unit, and
2) for transmitting to the first manufacturing unit, in response, the cryptogram associated with the identifier taken from the central database such that the first manufacturing unit can record this cryptogram in the unsecured memory (46) of this second unit.

15. A system according to Claim 14, **characterised in that** it includes:
- a second unit (82) for manufacturing security integrated circuits, this second manufacturing unit being suitable for recording, in the secured memory of each integrated circuit manufactured, the secret key and the unique identifier of the integrated circuit, and
- a second black box (86) suitable for transmitting to the second manufacturing unit the identifier of the integrated circuit and the secret key for recording in the secured memory of the integrated circuit manufactured.

16. A method of manufacturing a second cryptographic unit for applying a receiving method according to any of Claims 1 to 6, **characterised in that** this method includes:
- supplying a security integrated circuit containing:
a) a secured memory (26) in which a secret key is pre-recorded,
b) an algorithm for decrypting a cryptogram with the aid of the secret key, and
c) a unique identifier of this security integrated circuit,
- a step (159) of recording in a central database, for each security integrated circuit that can be used for manufacturing the second unit, the unique identifier of this integrated circuit that is associated with the cryptogram obtained by encrypting the session key with the secret key already pre-recorded in the secured memory of this integrated circuit, this session key having been obtained by diversification of a root key identical to the root key that is used to obtain the session key of the group of *N* second units,
- at the time of manufacturing the second unit with the aid of a security integrated circuit including the unique identifier of this integrated circuit and the secured memory in which the secret key is already pre-recorded:
a) a first black box takes (in 172) the unique identifier of the integrated circuit used for manufacturing the second unit and, in response, transmits (in 174) the cryptogram associated with the identifier taken from the central database to a first unit for manufacturing the second unit, and
b) the first manufacturing unit records (in 176) the cryptogram transmitted to an unsecured memory of the second unit.

17. A method according to Claim 18, **characterised in that:**
- a second black box transmits, to a second unit for manufacturing an integrated circuit, the identifier for each integrated circuit and the secret key to be recorded in the secured memory of the integrated circuit manufactured, and
- the second manufacturing unit records the secret key and the unique identifier of the integrated circuit transmitted by the second black box in the secured memory of the integrated circuit manufactured.

## Patentansprüche

1. Verfahren zum Empfang eines Multimediasignals, das mit Hilfe eines Steuerworts verschlüsselt ist, unter Verwendung einer ersten kryptographischen Einheit, die zur Verbindung mit einer beliebigen von P zweiten kryptographischen Einheiten geeignet ist, zur Bildung einer Empfangsvorrichtung des verschlüsselten Multimediasignals, welche erste Einheit ein Sicherheitsprozessor oder eine Entschlüsselungseinheit ist, in welcher bei Verbindung der ersten Einheit mit einer der zweiten Einheiten die erste Einheit das Steuerwort oder das Multimediasignal mit Hilfe eines Sitzungsschlüssels verschlüsselt (in 202), dann (in 204) das verschlüsselte Steuerwort oder das verschlüsselte Multimediasignal an die zweite Einheit übermittelt, und die zweite Einheit (in 208) das verschlüsselte Steuerwort oder das verschlüsselte Multimediasignal, das von der ersten Einheit mit Hilfe eines Sitzungsschlüssels übertragen worden ist, entschlüsselt, welche Sitzungschlüssel der ersten und der zweiten Einheiten erhalten werden durch Diversizierung von Wurzelschlüssein mit Hilfe eines gleichen Identifikators (D-ID), der zugleich den ersten und den zweiten Einheiten bekannt ist,
**dadurch gekennzeichnet, dass** ausschließlich die zweiten Einheiten einer Gruppe von N zweiten Einheiten, die aus einer umfassenderen Anordnung von P zweiten Einheiten ausgewählt sind, einen Sitzungsschlüssel (SK_H, SK_S) verwenden, der erhalten wird durch Diversifizierung eines Wurzelschlüssels (SK_Root_H, SK_Root_S), der identisch ist mit dem Wurzelschlüssel (SK_Root_H, SK_Root_S), der verwendet wird zur Erhaltung des Sitzungsschlüssels der ersten Einheit, wobei N eine Zahl der zweiten Einheit ist, die ausschließlich kleiner ist als P und ausschließlich größer ist als 1.

2. Verfahren gemäß Anspruch 1, für eine erste Einheit oder eine zweite Einheit, die mit einem Modul zur Diversifizierung des Wurzelschlüssels ausgestattet, zur Ermittlung des Sitzungsschlüssels**, dadurch gekennzeichnet, dass** nach Verbindung der ersten Einheit mit einer der zweiten Einheiten der Gruppe zumindest die erste oder die zweite Einheit (in 196) den durch den Identifikator gespeicherten Wurzelschlüssel diversifiziert, zur Ermittlung des Sitzungsschlüssels, unter Verwendung des Diversifizierungsmoduls, das dann (in 222) zu einem unbenutzbaren Diversifizierungsmodul für die Schaffung eines neuen Sitzungsschlüssels wird, durch Zuordnung dieser Einheit ausschließlich zu der anderen Einheit, mit welcher sie verbunden ist.

3. Verfahren gemäß Anspruch 2, **dadurch gekennzeichnet, dass** das Diversifizierungsmodul unverwendbar gehalten wird, indem der Wurzelschlüssel zur Diversifizierung unverwendbar gehalten wird.

4. Verfahren gemäß einem der vorhergehenden Ansprüche, **dadurch gekennzeichnet, dass** nach der Verbindung der ersten Einheit mit einer der zweiten Einheiten eine der ersten oder zweiten Einheiten (in 194) den Identifikator an die andere Einheit in nicht verschlüsselter Form überträgt.

5. Verfahren gemäß einem der vorhergehenden Ansprüche, für zweite Einheiten, die zur Verwendung eines materiellen und/oder logischen Schutzmodus der Schnittstelle mit der ersten Einheit vorgesehen sind, **dadurch gekennzeichnet, dass** nach der Verbindung der ersten Einheit mit einer der zweiten Einheiten die erste Einheit den Sitzungsschlüssel oder den zur Ermittlung des Sitzungsschlüssels erhaltenen Wurzelschlüssel auswählt, zur Verwendung im Schutzmodus, den die erste Einheit der zweiten Einheit auferlegt, oder zur Verwendung durch die zweite Einheit.

6. Verfahren gemäß einem der vorhergehenden Ansprüche, **dadurch gekennzeichnet, dass** dann, wenn die erste Einheit ein Sicherheitsprozessor ist, die zweite Einheit eine Entschlüsselungseinheit ist, oder wenn die erste Einheit eine Entschlüsselungseinheit ist, die zweite Einheit ein Empfänger für verschlüsselte Multimediasignale ist.

7. Zweite kryptographische Einheit, vorgesehen
- zur Verbindung mit einer ersten kryptographischen Einheit zur Bildung eines Teils einer Empfangsvorrichtung für ein verschleiertes Multime- diasignal, welche erste kryptographische Einheit ein Sicherheitsprozessor oder eine Entschlüsselungseinheit sein kann, und
- zum Entschlüsseln eines verschlüsselten Steuerworts oder eines verschlüsselten Multimediasignals, das von der ersten Einheit mit Hilfe eines Sitzungsschlüssels übertragen wird, **dadurch gekennzeichnet, dass** der Sitzungsschlüssel, der von der zweiten Einheit verwendet wird, erhalten wird durch Diversifizierung eines gemeinsamen Wurzelschlüssels, der identisch ist mit dem verwendeten Wurzelschlüssel, zur Erhaltung von Sitzungsschlüsseln einer Gruppe von N zweiten Einheiten, die ausgewählt sind aus einer umfassenderen Anordnung von P zweiten Einheiten, wobei N eine Zahl von zweiten Einheiten ist, die ausschließlich kleiner ist als P und ausschließlich größer ist als 1.

8. Zweite Einheit gemäß Anspruch 7, **dadurch gekennzeichnet, dass** diese einen nicht gesicherten Speicher (44,46) umfaßt, der zumindest ein vorgespeichertes Kryptogramm des Sitzungsschlüssels enthält.

9. Zweite Einheit gemäß Anspruch 7, vorgesehen zur Verbindung mit einer ersten Einheit, die vorgesehen ist zur Diversifizierung des Wurzelschlüssels durch einen Identifikator zur Erhaltung des Sitzungsschlüssels, **dadurch gekennzeichnet, dass** die zweite Einheit ein Übertragungsmodul (38) umfaßt, zur Übertragung des Identifikators in nicht verschlüsselter Form an die erste Einheit nach der Verbindung der ersten Einheit mit der zweiten Einheit.

10. Zweite Einheit gemäß Anspruch 8, **gekennzeichnet durch** einen integrierten Sicherheitsschaltkreis (24) in dessen Innerem sich ein gesicherter Speicher (26) befindet, enthaltend zumindest einen Entschlüsselungsschlüssel und einen ersten Algorithmus (28) zur Entschlüsselung eines vorgespeicherten Kryptogramms zur Erhaltung des Sitzungsschlüssels, und einen zweiten Algorithmus zur Entschlüsselung des verschlüsselten Steuerworts oder des verschlüsselten Multimediasignals, das **durch** die erste Einheit mit Hilfe des **durch** den ersten Algorithmus verschlüsselten Sitzungsschlüssels übertragen wird.

11. Zweite Einheit gemäß einem der Ansprüche 8 bis 10, **dadurch gekennzeichnet, dass** die zweite Einheit umfaßt:
- einen nicht gesicherten Speicher (46), in welchem ein Kryptogramm des Sitzungsschlüssels vorgespeichert ist, welches Kryptogramm erhalten wird durch Verschlüsseln des Sitzungsschlüssels mit einem geheimen Schlüssel, und
- einen integrierten Sicherheitsschaltkreis (24), umfassend:
a) einen gesicherten Speicher (26), in welchem der geheime Schlüssel vorgespeichert ist, und
b) einen Algorithmus (30) zur Entschlüsselung des Kryptogramms mit Hilfe des geheimen Schlüssels.

12. Zweite Einheit gemäß einem der Ansprüche 7 bis 11, in welcher dann, wenn die erste Einheit ein Sicherheitsprozessor ist, die zweite Einheit eine Entschlüsselungseinheit ist, oder dann, wenn die erste Einheit eine Entschlüsselungseinheit ist, die zweite Einheit ein Empfänger für verschlüsselte Multimediasignale ist.

13. System zum Empfang eines Multimediasignals, das mit Hilfe eines Steuerworts verschlüsselt ist, welches System zumindest eine erste kryptographische Einheit (16;234) umfaßt, und P zweite kryptographische Einheiten (14;236), entsprechend einem der Ansprüche 7 bis 12,
wobei die erste kryptographische Einheit ein Sicherheitsprozessor oder eine Entschlüsselungseinheit ist, zur Verbindung mit einer der P zweiten kryptographischen Einheiten, zur Bildung eines Teils einer Empfangsvorrichtung des verschlüsselten Multimediasignals, welche erste Einheit vorgesehen ist zur Verschlüsselung des Steuerworts oder des entschlüsselten Multime- diasignals mit Hilfe eines Sitzungsschlüssels, und zur Übertragung des verschlüsselten Steuerworts oder des somit verschlüsselten Multimediasignals an die zweite Einheit, mit welcher die erste Einheit verbunden ist, wobei jede zweite Einheit vorgesehen ist zur Entschlüsselung des verschlüsselten Steuerworts oder des verschlüsselten Multimediasignals, das durch die erste Einheit mit Hilfe eines Sitzungsschlüssels übertragen wurde, welche Sitzungsschlüssel der ersten und der zweiten Einheiten erhalten werden durch Diversifizierung eines Wurzelschlüssels mit Hilfe eines gleichen Identifikators,
**dadurch gekennzeichnet, dass** ausschließlich die zweiten Einheiten einer Gruppe von N zweiten Einheiten, die ausgewählt werden aus einer umfassenderen Anordnung von P zweiten Einheiten, vorgesehen sind zur Verwendung eines Sitzungsschlüssels (SK_H, SK_S), der erhalten wird durch die Diversifizierung eines gemeinsamen Wurzelschlüssels (SK_Root_H, SK_Root_S), der identisch ist mit dem Wurzelschlüssel (SK_Root_H, SK_Root_S), der verwendet wird zur Erhaltung des Sitzungsschlüssels (SK_H, SK_S) der ersten Einheit, wobei N eine Zahl von zweiten Einheiten ist, die ausschließlich kleiner ist als P und ausschließlich größer ist als 1.

14. System zur Herstellung einer zweiten kryptographischen Einheit gemäß Anspruch 11 im Zusammenhang mit Anspruch 7, **dadurch gekennzeichnet, dass** das System umfaßt:
- eine zentrale Datenbank (114), in der für jeden integrierten Sicherheitsschaltkreis, der für die Herstellung der zweiten Einheit verwendbar ist, ein einzigartiger Identifikator dieses integrierten Schaltkreises gespeichert ist, der dem Kryptogramm zugeordnet ist, das erhalten wird durch Verschlüsselung des Sitzungsschlüssels mit dem geheimen Schlüssel, der bereits in dem gesicherten Speicher des integrierten Schaltkreises vorgespeichert ist,
- eine erste Einheit (90) zur Herstellung der zweiten Einheit mit Hilfe eines integrierten Sicherheitsschaltkreises (24), umfassend den einzigartigen Identifikator dieses integrierten Schaltkreises und den gesicherten Speicher (26), in welchem der geheime Schlüssel bereits vorgespeichert ist, welche erste Herstellungseinheit dazu vorgesehen ist, in dem nicht gesicherten Speicher (46) der zweiten Einheit das Kryptogramm des Sitzungsschlüssels zu speichern,
- und einen ersten schwarzen Kasten (92), vorgesehen:
1) zur Ermittlung des einzigartigen Identifikators des integrierten Schaltkreises, der zur Herstellung der zweiten Einheit verwendet wird, und
2) zur Übertragung als Antwort an die erste Herstellungseinheit des Kryptogramms, das dem ermittelten Identifikator zugeordnet ist, der in der zentralen Datenbank ermittelt worden ist, damit die erste Herstellungseinheit das Kryptogramm in dem nicht gesicherten Speicher (46) der zweiten Einheit speichern kann.

15. System gemäß Anspruch 14, **gekennzeichnet durch**:
- eine zweite Herstellungseinheit (82) für integrierte Sicherheitsschaltkreise, welche zweite Herstellungseinheit dazu vorgesehen ist, in dem gesicherten Speicher jedes hergestellten integrierten Schaltkreises den geheimen Schlüssel und den einzigartigen Identifikator des integrierten Schaltkreises zu speichern,
- und einen zweiten schwarzen Kasten (86) zur Übertragung an die zweite Herstellungseinheit des Identifikators des integrierten Schaltkreises und des geheimen Schlüssels zur Speicherung in dem gesicherten Speicher des hergestellten integrierten Schaltkreises.

16. Verfahren zur Herstellung einer zweiten kryptographischen Einheit zur Verwendung in einem Empfangsverfahren gemäß einem der Ansprüche 1 bis 6, **dadurch gekennzeichnet, dass** dieses Verfahren umfaßt:
- die Schaffung eines integrierten Sicherheitsschaltkreises, umfassend:
a) einen gesicherten Speicher (26), in welchem ein geheimer Schlüssel vorgespeichert ist,
b) einen Algorithmus zur Entschlüsselung eines Kryptogramms mit Hilfe des geheimen Schlüssels, und
c) einen einzigartigen Identifikator des integrierten Sicherheitsschaltkreises,
- einen Schritt (159) der Speicherung in einer zentralen Datenbank für jeden integrierten Sicherheitsschaltkreis, der zur Herstellung der zweiten Einheit verwendbar ist, des einzigartigen Identifikators dieses integrierten Schaltkreises, der dem Kryptogramm zugeordnet ist, das erhalten wird durch Verschlüsselung des Sitzungsschlüssels mit dem geheimen Schlüssel, der bereits in dem gesicherten Speicher des integrierten Schaltkreises vorgespeichert ist, welcher Sitzungsschlüssel erhalten wird durch Diversifizierung eines Wurzelschlüssels, der identisch ist mit dem Wurzelschlüssel, der verwendet wird zur Erhaltung des Sitzungsschlüssels der Gruppe von N zweiten Einheiten,
- während der Herstellung der zweiten Einheit mit Hilfe eines integrierten Sicherheitsschaltkreises mit dem einzigartigen Identifikator dieses integrierten Schaltkreises und des gesicherten Speichers, in welchem der geheime Schlüssel vorgespeichert ist:
a) ein erster schwarzer Kasten ermittelt (in 172) den einzigartigen Identifikator des integrierten Schaltkreises, der zur Herstellung der zweiten Einheit verwendet wird, und übermittelt (in 174) daraufhin das Kryptogramm, das dem ermittelten Identifikator in der zentralen Datenbank zugeordnet ist, an eine erste Einheit zur Herstellung der zweiten Einheit, und
b) die erste Herstellungseinheit speichert (in 176) das Kryptogramm, das in einen nicht gesicherten Speicher der zweiten Einheit übertragen worden ist.

17. Verfahren gemäß Anspruch 18, **dadurch gekennzeichnet,**
- **dass** ein zweiter schwarzer Kasten an eine zweite Einheit zur Herstellung des integrierten Schaltkreises den Identifikator jedes integrierten Schaltkreises und den geheimen Schlüssel zur Speicherung in dem gesicherten Speicher des hergestellten integrierten Schaltkreises überträgt,
- und **dass** die zweite Herstellungseinheit den geheimen Schlüssel und den einzigartigen Identifikator des integrierten Schaltkreises speichert, der von dem zweiten schwarzen Kasten in den gesicherten Speicher des hergestellten integrierten Schaltkreises übertragen worden ist.
